(19) **Europäisches Patentamt**

**European Patent Office**

**Office européen des brevets**

(11) **EP 1 078 899 B1**

(12) **EUROPEAN PATENT SPECIFICATION**

(45) Date of publication and mention
of the grant of the patent:
**09.04.2003 Bulletin 2003/15**

(51) Int Cl.[7]: **C04B 24/42**, C04B 28/02

(21) Application number: **00202845.4**

(22) Date of filing: **14.08.2000**

(54) **Composite insulating material and method for manufacturing it**

Zusammengesetztes Isolationsmaterial und Verfahren zu dessen Herstellung

Matériau isolant composé et son procédé de production

(84) Designated Contracting States:
**AT BE CH CY DE DK ES FI FR GB GR IE IT LI LU MC NL PT SE**

(30) Priority: **25.08.1999 BE 9900574**

(43) Date of publication of application:
**28.02.2001 Bulletin 2001/09**

(73) Proprietor: **Sonitron, naamloze Vennootschap**
**9100 Sint-Niklaas (BE)**

(72) Inventor: **Sonitron, naamloze Vennootschap**
**9100 Sint-Niklaas (BE)**

(74) Representative: **Donné, Eddy**
**M.F.J.Bockstael**
**Arenbergstraat 13**
**2000 Anvers (BE)**

(56) References cited:
**EP-A- 0 032 176          WO-A-81/01703**
**WO-A-95/26323          WO-A-98/45222**
**DE-A- 2 646 429**

- **CHEMICAL ABSTRACTS, vol. 107, no. 24, 14 December 1987 (1987-12-14) Columbus, Ohio, US; abstract no. 222180a, ZADEK: "building material with low capilarity" XP000017023 & CS 243 029 A**
- **CHEMICAL ABSTRACTS, vol. 111, no. 2, 10 July 1989 (1989-07-10) Columbus, Ohio, US; abstract no. 11782t, HUANG: "building plates and manufacture" XP000059525 & CN 86 106 776 A 13 April 1988 (1988-04-13)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

The present invention concerns a composite insulating material, in particular a material which is sound-insulating as well as thermally insulating, and which contains a mixture of particles of at least one chemically inert, mineral, incombustible material and fibres, bond by a hydraulic binding agent, at least one silicon being deposited in its pores or capillary tubes.

Most thermally insulating materials are composed of foamed polymers such as polyurethane foam, woolly materials such as rock wool or natural fibres such as wood fibres and asbestos.

Synthetic foams are usually inflammable, toxic and difficult to recycle. Also natural fibres are usually inflammable.

The sound-insulating qualities of thermally insulating materials are usually bad, given the large amount of air provided therein and given the small mass of the fillers used in this insulation.

Also, known sound-insulating materials are not made on the basis of foam, but on the basis of fillers which are bond by a hydraulic binding agent.

A known sound-insulating material of the above-mentioned type is described in international patent No. 95/26323. This known material contains a mixture of hollow microspheres of glass, and possibly of glass fibres bond with cement.

It is mentioned that the insulating material is watertight but, like all materials on the basis of cement or other hydraulic binding agents, it is microporous and thus has a capillarity.

Due to the capillarity, the material will absorb water, as a result of which its sound-insulating qualities are strongly reduced.

DE-A-26 46 429 discloses a method for preparing a composition which leads to a lightweight building material, comprising mixing perlite as a chemically inert material, cement as a hydraulic binder, a silane and rockwool fibres as mineral fibres, a resin and $CaCl_2$.

The invention aims an insulating material which does not have the above-mentioned disadvantage and which is particularly good as a sound-insulating material as well as as a heat-insulating material, which does not absorb moisture, so that its insulating qualities are preserved, and which moreover is not toxic, incombustible and which can be easily recycled.

This aim is reached according to the invention in that the material comprises fibres of at least two different types chosen from the following types: mineral fibres, polymer fibres or organic fibres, mixed in an isotropic manner.

Preferably, the material comprises fibres of at least two of the following types:

- mineral fibres having a fibre length between 0.2 μm and 20 mm and a diameter of 5 to 2,000 μm,
- polymer fibres having a length between 1 mm and 50 mm and a diameter between 5 μm and 2 mm,

organic fibres having a length between 100 μm and 10 mm and a thickness of 1 to 2,000 μm.

The mixture may contain more than one chemically inert material and, apart from said chemically inert material, silicon dioxide powder, whose particle size is smaller than 20 micrometer, for example between 1 and 15 micrometer. These micro powder particles are preferably smooth microspheres.

Said micro powder particles are situated in the capillary tubes, formed between the other components, so that several additional capillary tubes are formed, and the total volume of capillary tubes is reduced.

The insulating material preferably also contains an amount of silicate or silica material forming a bond between the particles of the mineral material.

The mineral, chemically inert material can be a material or contain a material of the group composed of perlite, vermiculite and diatomaceous earth, whereby the perlite or vermiculite is preferably expanded, has a specific gravity of less than 1,000 kg/m³, for example between 30 and 240 kg/m³, and has a grain size situated between 0.1 and 500 micrometer.

The use of expanded perlite in thermally insulating material is known, but the perlite is bond by synthetic material.

A suitable hydraulic binding agent is cement, for example white Portland cement, aluminous cement, oxichloride cement, etc.

The insulating material can be provided with a reinforcement, for example a mat or tissue of mineral fibres, in particular glass fibres, or it can have an open structure which is either or not supporting, such as a grid, a honeycomb structure or such.

The invention also concerns a method which is particularly suitable for manufacturing a composed insulating material as described above.

Thus, the invention concerns a method for manufacturing a composed insulating material which is sound-insulating as well as thermally insulating, whereby particles of at least one chemically inert, mineral and incombustible material, fibres, a hydraulic binding agent and water are mixed, after which the material is made to cure, a quantity of silane is added to the mixture, preferably to the water, characterised in that at least two types of fibres from the types of mineral fibres, polymer fibres and organic fibres are mixed in an isotropic manner in the mixture.

The silane reacts with hydroxyl groups so as to form silanol, which is transformed into a silicone as a result of polycondensation. While the mixture cures, said silicone is deposited in the capillary tubes which are being formed, as a result of which the latter become water-resistant.

Preferably, fibres of at least two of the following types are added: mineral fibres having a fibre length between 0.2 μm and 20 mm and a diameter of 5 to 2,000

μm, polymer fibres having a length between 1 mm and 50 mm and a diameter between 5 μm and 2 mm, and organic fibres having a length between 100 μm and 10 mm and a thickness of 1 to 2,000 μm.

Although at least a part of the mineral materials is already on a basis of silicon dioxide, an amount of amorphous synthetic silicon dioxide can be added as an additional chemically inert material according to a variant in the shape of powder whose particle size is smaller than 20 micrometer, for example between 1 and 15 micrometer. These micro powder particles are preferably smooth microspheres.

Said amorphous silicon dioxide will penetrate into the capillary tubes, as mentioned above.

The silane is preferably alcoxysilane, for example triethoxymethyl silane.

Also an amount of silicate can be added.

This silicate, for example ortho-ethyl silicate, reacts with water so as to form silica, which bonds and reinforces the loose structure of the mineral materials.

The volume ratio of silane versus silicate is preferably situated between 1/20 and 20/1.

2 to 10 vol.% of silane and silicate, calculated together on the total volume of the mixture, can be added.

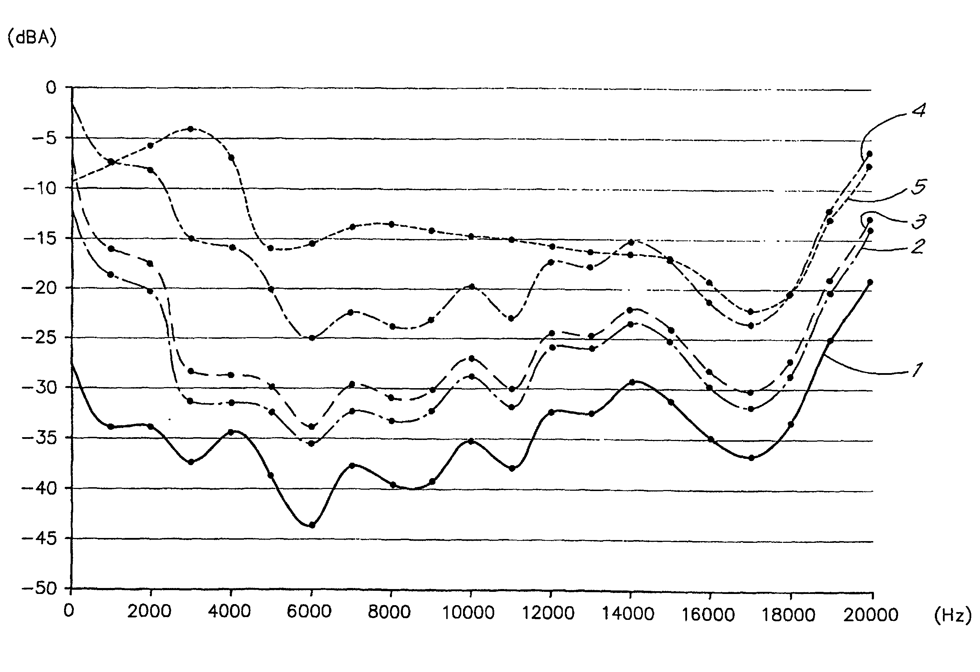

In order to better explain the characteristics of the invention, the following preferred embodiments of a composed insulating material and of a method for manufacturing an insulating material according to the invention are described as an example only without being limitative in any way, with reference to the accompanying drawing which represents a graph of the acoustic damping as a function of the frequency for the material according to the invention and a number of known materials.

The composed material according to the invention, which is heat-insulating as well as sound-insulating, mainly consists of a mixture of particles of at least one chemically inert, mineral and incombustible material of the group composed of perlite, vermiculite and diatomaceous earth, with fibres mixed with it in an isotropic manner, which mixture is bond with a hydraulic binding agent whose micropores or capillary tubes contain at least one rubberlike silicone.

The mineral material on the basis of silicon dioxide is bond to a lesser or greater extent by means of extra silicon dioxide resulting from the reaction of silicates with water.

According to a variant, also smooth microspheres having a size which is smaller than 20 micrometer, preferably between 1 and 15 micrometer, of amorphous synthetic silicon dioxide are situated in the capillary tubes which are formed while the binding agent cures.

These microspheres split up said capillary tubes in several smaller ones and reduce the total volume of the capillary tubes.

Perlite is a volcanic rock of the family of rheolites and is composed more or less as follows:
74% $SiO_2$, 12.5% $Al_2O_3$, 1% $Fe_2O_3$, 1% CaO, 1% MgO, 4.5% $K_2O$, 3.5% $Na_2O$ and 2.5% $H_2O$.

The perlite is preferably expanded and has a specific gravity which is smaller than 1,000 kg/m$^3$, preferably between 30 and 240 kg/m$^3$, and a grain size of 0.1 to 1,000 μm.

Vermiculite is a mica-like, incombustible silicate having the following chemical formula:

$$(Mg, Fe^{3+} Al)_3(OH)_2/Al_{1,25}Si_{2,75}O_{10})Mg_{0,33}(H_2O)$$

Vermiculite is water-resistant and strongly expandable at high temperatures. The vermiculite is preferably present in the insulating material in expanded form.

Diatomaceous earth or diatomite is a porous silica material with a small density.

These inert mineral materials serve as fillers, make the specific gravity decrease to for example some 400 kg/m$^3$, and hold up sound waves.

The fibres are:

- mineral fibres such as glass fibres having a fibre length between 0.2 μm and 20 mm and a diameter of 5 to 2,000 μm, which increase the rigidity and the bending strength.

- Polymer fibres such as for example polypropylene having a length between 1 mm and 50 mm and a diameter between 5 μm and 2 mm, which increase the cohesion of the mixture, the tenacity, the resistance against cracks and the processability, and which have a water-repellent effect.

- Organic fibres such as for example cellulose fibres, having a length between 100 μm and 10 mm and a thickness of 1 to 2,000 μm, which reduce the thermal conductivity and increase the absorption of sound shock waves; especially cotton fibres have good insulating qualities.

Two or three of these types of fibres are simultaneously present in the mixture, and especially the combination of the three different types of fibres decreases the thermal conductivity and increases the sound absorption. However, for certain applications, it is possible to omit one or two of the three groups of fibres.

The volume ratio between the fibres of the three groups can vary between very large margins, and one type of fibres can be the major component of the fibre mixture.

A suitable hydraulic binding agent is cement. This cement can be Portland cement having a typical composition of for example 65% CaO, 5.9% $Al_2O_3$, 18-27% $SiO_2$, 0.6% $Fe_2O_3$, 1.1% MgO and 0.1% $SO_3$;

aluminous cement with for example 39.8%, $A\ell_2O_3$, 32% CaO, 41.6% $Fe_2O_3$, 5.3% $SiO_2$, 1.3% MgO and 0.1% $SO_3$; or oxichloride cement $MgCl_2$.

Also other types of cement are possible, such as blast furnace slag cement, or artificial cements in the broadest sense, obtained by grinding clinkers resulting from cooking a mixture of lime and gypsum at a high temperature.

The hydraulic binding agent can also be gypsum resulting from boiling natural gypsum at a low temperature, followed by a grinding, or lime resulting from the annealing of carbonised natural stone, such as limestone.

The volume ratio is 1 to 20 parts of chemically inert mineral material and 0.05 to 10 parts of fibres for 1 part of hydraulic binding agent.

Preferably, this ratio amounts to 1 to 10 parts of perlite, vermiculite or diatomaceous earth and 0.1 to 3 parts of fibres for 1 part of cement.

The insulating material can resist temperatures up to maximum 1,000°C, depending on .the composition. It has a low thermal conduction coefficient of for example 0.039 W/(m.K), but also a high sound damping value of for example 50 dB for frequencies between 50 and 20,000 Hz.

A small quantity of polymer such as styrene acrylate, styrene butadiene or polyvinyl acetate can be added to the insulating material so as to increase the flexibility of the material.

After having been immersed in water for 12 hours, the weight of the insulating material has increased with hardly 1%, and thus it is water-resistant. Since no moisture is absorbed, its insulating qualities will not change as time goes by.

The compression strength during 1,000 hours of load usually amounts to about 3 $N/mm^2$.

In order to manufacture the above-described insulating material, one proceeds as follows:

0,05 to 10 volume parts, in particular 0.1 to 3 volume parts of several types of the above-mentioned fibres, are mixed in an isotropic manner with 1 to 20 volume parts of perlite, vermiculite or diatomaceous earth and with 1 volume part of hydraulic binding agent, in particular cement of the above-mentioned series of cements.

To this mixture are added 1 to 10 volume parts of water for one volume part of hydraulic binding agent onto which has been added 1 to 10 vol.% of silane, with which is mixed an amount of silicate, after which the whole is made to cure.

The volume ratio of silane to silicate is situated between 1/20 and 20/1.

A suitable silane is alcoxysilane, in particular trioxymethyl silane with the formula $C_7H_{18}O_3Si$, whose hydrolysis or reaction with OH groups results in silanol, which is then transformed in silicone by means of polycondensation, which is deposited in the pores or capillary tubes which are formed during the curing.

The silicone is water-resistant and sound shock wave-absorbing, and thus provides for the water-repellent effect of the insulating material.

If among others organic fibres, for example cellulose fibres such as cotton fibres, are added as fibres, the silicone also has for a result that these fibres will not become entangled when they are mixed with the other components, which otherwise would be the case.

A suitable silicate is ortho-ethyl silicate with the chemical structure $Si(C_2H_5O)_4$, whose reaction with water represented hereafter forms silica ($SiO_2$), which bonds and reinforces the loose structure of the mineral materials on the basis of $SiO_2$.

$$(C_2H_5O)_4 \text{-} Si + 2\, H_2O \rightarrow SiO_2 + 4\, C_2H_5OH$$

After water has been added, mixed with silane and silicate, the material will cure after a few days, for example two, and it can possibly be walked on.

Additives can be added to the above-mentioned components, such as for example colorants.

The curing can be speeded up for example by adding an accelerator, for example on the basis of $CaCl_2$. The amount of accelerator can be situated between 5 and 30 vol.% of the water volume.

According to a variant, an amount of amorphous synthetic silicon dioxide is added as an additional, chemically inert mineral and incombustible material in the shape of smooth microspheres with a particle size which is smaller than 20 micrometer and which is preferably situated between 1 and 15 micrometer.

The elastic modulus, which normally amounts to for example 1,000 $N/mm^2$, can be decreased by adding a polymer such as styrene acrylate, styrene butadiene or polyvinyl acetate to the material, for example between 1 and 20 vol.% of the water volume. This increases the flexibility of the cured material.

This composed material can be applied in the shape of prefabricated plates or such, but it can also be cast or squirted in the required shape on the spot as a mortar, after water has been added to the dry mixture, whereby the hydraulic binding agent still has its powder form and has not cured yet, for example in a mould for making plates or objects, between cavity walls, or on a floor or another surface, etc.

The tensile strength, the compressibility, the bending strength and the adhesion can be increased by providing a stiffening or a sort of reinforcement in the material, in particular mats or tissues of mineral fibres such as glass mats, woven with a mesh size of for example 20 x 20 mm with bundles having a diameter of about 1 mm, and consisting of some 40 fibres having a thickness of 25 micrometer.

These glass mats can be provided in the material under tension, which further increases the tensile strength and the bending strength.

Other reinforcements such as grids or other open structures are possible.

Objects made of this material can be self-supporting, either or not with a reinforcement. They can also be provided on an open supporting structure with for example cavities, in which said material is then poured or squirted. Such supporting structures are honeycomb structures or lattice structures made of plastic or metal. They can become self-sustaining or self-supporting when the material provided on it or in it cures.

The fibre mixtures increase the attenuation of the sound vibrations by the dispersion in the mass in an isotropic manner, they increase the tensile strength, the elastic modulus and the compressibility. However, they decrease the water absorption, the linear coefficient of expansion, the thermal conduction coefficient and the specific gravity.

When water is added on the spot, the required quantity can be exactly produced, such that there is no residue.

The invention will be further illustrated by means of a practical composition, whereby the parts are volume parts.

1.0 part of cement

7.0 parts of perlite

3.0 parts of cellulose fibres

0.5 parts of polypropylene fibres

5.0 parts of water with 2% volume parts and a mixture of equal volumes of trioxymethyl silane and ortho-ethyl silicate.

With this composition was formed a cube of 12 x 12 x 12 cm in which was provided an opening up to the centre for a standing microphone placed in this opening.

Then, a loudspeaker was placed at 30 cm of said cube, and music with a highly varying frequency produced by a modern orchestra was emitted via this loudspeaker by means of sound equipment connected to it.

Thus, the sound measured by the standing microphone is what goes through a 6-cm-thick layer of insulating material of the sound emitted by the loudspeaker.

Twenty samples of the signal which was received by the standing microphone were taken by means of a fast fourier computer analysing device and converted into numerical values. The results, i.e. the damping in dBA at different frequencies, are represented by line 1 in the graph represented in the accompanying figure.

By way of comparison, values measured in exactly the same manner are represented by the lines 2 to 5 in this figure for cellular concrete, fibreboard, soft wood and polyurethane foam.

It is clear that the sound damping of the material according to the composition is significantly better than that of the other materials, such as of the lowest tones. In the most common audio range of 50 Hz to 8,000 Hz, the average damping is about 40 dB.

The invention is by no means limited to the above-described embodiments; on the contrary, such an insulating material and such a method for manufacturing it can be made in all sorts of variants while still remaining within the scope of the invention.

**Claims**

1. Composite insulating material, in particular a material which is sound-insulating as well as thermally insulating, and which contains a mixture of particles of at least one chemically inert, mineral, incombustible material and fibres, bond by a hydraulic binding agent, at least one silicone, being deposited in its pores or capillary tubes, **characterised in that** it comprises fibres of at least two different types chosen from the following types: mineral fibres, polymer fibres or organic fibres dispersed in an isotropic manner.

2. Composite insulating material according to claim 1, **characterised in that** it comprises fibres of at least two of the following types:

   - mineral fibres having a fibre length between 0.2 μm and 20 mm and a diameter of 5 to 2,000 μm,
   - polymer fibres having a length between 1 mm and 50 mm and a diameter between 5 μm and 2 mm,
   - organic fibres having a length between 100 μm and 10 mm and a thickness of 1 to 2,000 μm.

3. Composite insulating material according to claim 1 or 2, **characterised in that**, .apart from said chemically inert material, it also contains a quantity of amorphous synthetic silicon dioxide powder, whose particle size is smaller than 20 micrometer.

4. Composite insulating material according to claim 3, **characterised in that** the size of the particles of amorphous silicon dioxide is situated between 1 and 15 micrometer.

5. Composite insulating material according to claim 3 or 4, **characterised in that** the powder particles of amorphous silicon dioxide are smooth microspheres.

6. Composite insulating material according to any one of the preceding claims, **characterised in that** it contains an amount of silicate or silica material which forms a bond between the particles of the mineral material.

7. Composite insulating material according to any one of the preceding claims, **characterised in that** the chemically inert mineral material is a material or contains a material of the group composed of perlite, vermiculite and diatomaceous earth.

8. Composite insulating material according to claim 7, **characterised in that** the perlite or vermiculite is expanded and has a specific gravity of less than 1,000 kg/m$^3$.

9. Composite insulating material according to any of the preceding claims, **characterised in that** the particles of the chemically inert mineral material have a grain size situated between 0.1 and 1,000 μm.

10. Composite insulating material according to any of the preceding claims, **characterised in that** the hydraulic binding agent is cement.

11. Composite insulating material according to any of the preceding claims, **characterised in that** it is provided with a reinforcement.

12. Composite insulating material according to claim 11, **characterised in that** the reinforcement is a mat or a tissue of mineral fibres, in particular glass fibres, or an open structure, such as a grid or a honeycomb structure.

13. Method for producing a composite insulating material which is sound-insulating as well as thermally insulating, whereby particles of at least one chemically inert, mineral and incombustible material, fibres, a hydraulic binding agent and water are mixed, after which the material is made to cure, a quantity of silane is added to the mixture, preferably to the water, **characterised in that** at least two types of fibres from the types of mineral fibres, polymer fibres and organic fibres are mixed in an isotropic manner in the mixture.

14. Method according to claim 13, **characterised in that** fibres of at least two of the following types are added: mineral fibres having a fibre length between 0.2 μm and 20 mm and a diameter of 5 to 2,000 μm, polymer fibres having a length between 1 mm and 50 mm and a diameter between 5 μm and 2 mm, and organic fibres having a length between 100 μm and 10 mm and a thickness of 1 to 2,000 μm.

15. Method according to claim 13 or 14, **characterised in that** an amount of amorphous synthetic silicon dioxide is added as an additional chemically inert material in the shape of powder whole particle size is smaller than 20 micrometer, preferably between 1 and 15 micrometer.

16. Method according to claim 15, **characterised in that** amorphous silicon dioxide is added to the mixture in the shape of smooth microspheres.

17. Method according to any one of claims 13 to 16, **characterised in that** an alcoxysilane is added to the mixture.

18. Method according to claim 17, **characterised in that** a tri-ethoxymethyl silane is added to the mixture.

19. Method according to any of claims 13 to 18, **characterised in that** perlite, vermiculite or diatomaceous earth is added as an inert material, whereby the perlite and the vermiculite are preferably expanded.

20. Method according to claim 19, **characterised in that** expanded perlite is added having a specific gravity which is smaller than 1,000 kg/m$^3$ and having a grain size between 0.1 and 1,000 μm.

21. Method according to any of claims 13 to 20, **characterised in that** a volume of inert material is mixed which amounts to 1 to 20 times the volume of the hydraulic binding agent, and a volume of fibres which is 0.01 to 10 times the volume of hydraulic binding agent.

22. Method according to claim 21, **characterised in that** a volume of inert material is mixed which amounts to 1 to 10 times the volume of hydraulic binding agent, and a volume of fibres which is 0.1 to 3 times the volume of hydraulic binding agent.

23. Method according to any of claims 13 to 22, **characterised in that** silane is mixed with the water in an amount of 0.1 to 10 vol.%, after which this mixture is added to the mixture of inert material, fibres and hydraulic binding agent.

24. Method according to any of claims 13 to 23, **characterised in that** a volume of water with silane is added which amounts between 1 and 10 times the volume of hydraulic binding agent.

25. Method according to any of claims 13 to 24, **characterised in that** also an amount of silicate is added to the mixture.

26. Method according to claim 25, **characterised in that** ortho-ethyl silicate is added to the mixture.

27. Method according to claim 25 or 26, **characterised in that** 2 to 10 vol.% of silane and silicate, calculated on the total volume of the mixture, is added in a mutual volume ratio of 20/1 to 1/20.

**Patentansprüche**

1. Zusammengesetztes Isolationsmaterial, insbesondere ein Material, das sowohl geräuschisolierend als auch thermisch isolierend ist und das eine Mischung enthält von Partikeln aus zumindest einem chemisch inerten, mineralischen, unbrennbaren Material und Fasern, die mit einem hydraulischen Bindemittel gebunden sind, zumindest einem Silikon, das in seinen Poren oder Kapillarröhrchen abgelagert ist, **dadurch gekennzeichnet, dass** es Fasern zumindest zweier verschiedener Typen, gewählt aus den folgenden Typen, umfasst: auf isotrope Weise dispergierte Mineralfasern, Polymerfasern oder organische Fasern.

2. Zusammengesetztes Isolationsmaterial gemäß Anspruch 1, **dadurch gekennzeichnet, dass** es Fasern zumindest zweier der folgenden Typen enthält:

   - Mineralfasern mit einer Faserlänge zwischen 0,2 µm und 20 mm und einem Durchmesser von 5 bis 2.000 µm,
   - Polymerfasern mit einer Länge zwischen 1 mm und 50 mm und einem Durchmesser zwischen 5 µm und 2 mm,
   - organische Fasern mit einer Länge zwischen 100 µm und 10 mm und einer Dicke von 1 bis 2.000 µm.

3. Zusammengesetztes Isolationsmaterial gemäß Anspruch 1 oder 2, **dadurch gekennzeichnet, dass** es außer dem besagten chemisch inerten Material auch eine bestimmte Menge amorphen synthetischen Silikondioxidpulvers enthält, dessen Partikelgröße kleiner als 20 Mikrometer ist.

4. Zusammengesetztes Isolationsmaterial gemäß Anspruch 3, **dadurch gekennzeichnet, dass** die Größe der Partikel des amorphen Silikondioxids zwischen 1 und 15 Mikrometer liegt.

5. Zusammengesetztes Isolationsmaterial gemäß Anspruch 3 oder 4, **dadurch gekennzeichnet, dass** die Pulverpartikel des amorphen Silikondioxids glatte Mikrokügelchen sind.

6. Zusammengesetztes Isolationsmaterial gemäß einem der vorgenannten Ansprüche, **dadurch gekennzeichnet, dass** es eine bestimmte Menge an Silikat oder Silikamaterial enthält, das eine Bindung zwischen den Partikeln des mineralischen Materials bildet.

7. Zusammengesetztes Isolationsmaterial gemäß einem der vorgenannten Ansprüche, **dadurch gekennzeichnet, dass** das chemisch inerte mineralische Material ein Material ist oder ein Material enthält aus der Gruppe, die sich aus Perlit, Vermiculit und Kieselgur zusammensetzt.

8. Zusammengesetztes Isolationsmaterial gemäß Anspruch 7, **dadurch gekennzeichnet, dass** das Perlit oder Vermiculit expandiert ist und ein spezifisches Gewicht von weniger als 1.000 kg/m$^3$ hat.

9. Zusammengesetztes Isolationsmaterial gemäß einem der vorgenannten Ansprüche, **dadurch gekennzeichnet, dass** die Partikel des chemisch inerten mineralischen Materials eine Korngröße aufweisen, die zwischen 0,1 und 1.000 µm liegt.

10. Zusammengesetztes Isolationsmaterial gemäß einem der vorgenannten Ansprüche, **dadurch gekennzeichnet, dass** das hydraulische Bindemittel Zement ist.

11. Zusammengesetztes Isolationsmaterial gemäß einem der vorgenannten Ansprüche, **dadurch gekennzeichnet, dass** es mit einer Armierung versehen ist.

12. Zusammengesetztes Isolationsmaterial gemäß Anspruch 11, **dadurch gekennzeichnet, dass** die Armierung eine Matte oder ein Gewebe aus Mineralfasern, insbesondere Glasfasern, oder eine offene Struktur, wie etwa ein Gitter oder eine Wabenstruktur, ist.

13. Verfahren zur Herstellung eines zusammengesetzten Isolationsmaterials, das sowohl geräuschisolierend als auch thermisch isolierend ist, wobei Partikel zumindest eines chemisch inerten, mineralischen und unbrennbaren Materials, Fasern, ein hydraulisches Bindemittel und Wasser vermischt werden, wonach dieses Material ausgehärtet wird, der Mischung eine bestimmte Menge Silan zugesetzt wird, vorzugsweise zu dem Wasser, **dadurch gekennzeichnet, dass** zumindest zwei Typen von Fasern aus den Typen Mineralfasern, Polymerfasern und organische Fasern auf isotrope Weise in der Mischung gemischt werden.

14. Verfahren gemäß Anspruch 13, **dadurch gekennzeichnet, dass** Fasern von zumindest zwei der folgenden Typen zugefügt werden: Mineralfasern mit einer Faserlänge zwischen 0,2 µm und 20 mm und einem Durchmesser von 5 bis 2.000 µm, Polymerfasern mit einer Länge zwischen 1 mm und 50 mm und einem Durchmesser zwischen 5 µm und 2 mm, und organische Fasern mit einer Länge zwischen 100 µm und 10 mm und einer Dicke von 1 bis 2.000 µm.

15. Verfahren gemäß Anspruch 13 oder 14, **dadurch gekennzeichnet, dass** eine bestimmte Menge amorphen synthetischen Silikondioxids als zusätzliches chemisch inertes Material in Pulverform zugesetzt wird, dessen Partikelgröße kleiner als 20 Mikrometer ist, vorzugsweise zwischen 1 und 15 Mikrometer.

16. Verfahren gemäß Anspruch 15, **dadurch gekennzeichnet, dass** amorphes Silikondioxid der Mischung in Form glatter Mikrokügelchen zugesetzt wird.

17. Verfahren gemäß einem der Ansprüche 13 bis 16, **dadurch gekennzeichnet, dass** der Mischung ein Alkoxysilan zugesetzt wird.

18. Verfahren gemäß Anspruch 17, **dadurch gekennzeichnet, dass** der Mischung ein Tri-Ethoxymethylsilan zugesetzt wird.

19. Verfahren gemäß einem der Ansprüche 13 bis 18, **dadurch gekennzeichnet, dass** als inertes Material Perlit, Vermiculit oder Kieselgur zugesetzt wird, wobei das Perlit und das Vermiculit vorzugsweise expandiert sind.

20. Verfahren gemäß Anspruch 19, **dadurch gekennzeichnet, dass** expandiertes Perlit zugesetzt wird, mit einem spezifischen Gewicht, das kleiner ist als 1.000 kg/m$^3$, und mit einer Korngröße zwischen 0,1 und 1.000 μm.

21. Verfahren gemäß einem der Ansprüche 13 bis 20, **dadurch gekennzeichnet, dass** ein Volumen inerten Materials vermischt wird, das sich auf 1 bis 20 Mal das Volumen des hydraulischen Bindemittels beläuft, und ein Volumen von Fasern, das 0,01 bis 10 Mal das Volumen des hydraulischen Bindemittels beträgt.

22. Verfahren gemäß Anspruch 21, **dadurch gekennzeichnet, dass** ein Volumen inerten Materials vermischt wird, das sich auf 1 bis 10 Mal das Volumen des hydraulischen Bindemittels beläuft, und ein Volumen von Fasern, das 0,1 bis 3 Mal das Volumen des hydraulischen Bindemittels beträgt.

23. Verfahren gemäß einem der Ansprüche 13 bis 22, **dadurch gekennzeichnet, dass** Silan mit dem Wasser in einer Menge von 0,1 bis 10 Volumenprozent vermischt wird, wonach diese Mischung der Mischung von inertem Material, Fasern und hydraulischem Bindemittel zugesetzt wird.

24. Verfahren gemäß einem der Ansprüche 13 bis 23, **dadurch gekennzeichnet, dass** ein Volumen von Wasser mit Silan zugesetzt wird, das sich auf 1 bis 10 Mal das Volumen des hydraulischen Bindemittels beläuft.

25. Verfahren gemäß einem der Ansprüche 13 bis 24, **dadurch gekennzeichnet, dass** der Mischung auch eine bestimmte Menge Silikat zugesetzt wird.

26. Verfahren gemäß Anspruch 25, **dadurch gekennzeichnet, dass** der Mischung Orthoethylsilikat zugesetzt wird.

27. Verfahren gemäß Anspruch 25 oder 26, **dadurch gekennzeichnet, dass** 2 bis 10 Volumenprozent an Silan und Silikat, berechnet auf das Gesamtvolumen der Mischung, in einem gegenseitigen Volumenverhältnis von 20/1 bis 1/20 zugesetzt werden.

## Revendications

1. Matériau isolant composite, en particulier un matériau qui manifeste aussi bien une isolation acoustique qu'une isolation thermique et qui contient un mélange de particules d'au moins une matière incombustible, minérale, inerte du point de vue chimique et de fibres liées à l'aide d'un agent de liaison hydraulique, au moins une silicone étant déposée dans ses pores ou dans ses tubes capillaires, **caractérisé en ce qu'**il comprend des fibres d'au moins deux types différents choisis parmi les types indiqués ci-après : des fibres minérales, des fibres polymères ou des fibres organiques dispersées d'une manière isotrope.

2. Matériau isolant composite selon la revendication 1, **caractérisé en ce qu'**il comprend des fibres d'au moins deux des types indiqués ci-après :

   - des fibres minérales possédant une longueur de fibres entre 0,2 μm et 20 mm et un diamètre de 5 à 2000 μm,
   - des fibres polymères possédant une longueur entre 1 mm et 50 mm et un diamètre entre 5 μm et 2 mm,
   - des fibres organiques possédant une longueur entre 100 μm et 10 mm et une épaisseur de 1 à 2000 μm.

3. Matériau isolant composite selon la revendication 1 ou 2, **caractérisé en ce que**, en dehors de ladite matière inerte du point de vue chimique, il contient également une quantité de poudre de dioxyde de silicium synthétique amorphe, dont la granulométrie est inférieure à 20 microns.

4. Matériau isolant composite selon la revendication 3, **caractérisé en ce que** la dimension de particules du dioxyde de silicium amorphe se situe entre 1 et 15 microns.

**5.** Matériau isolant composite selon la revendication 3 ou 4, **caractérisé en ce que** les particules pulvérulentes de dioxyde de silicium amorphe sont des microsphères lisses.

**6.** Matériau isolant composite selon l'une quelconque des revendications précédentes, **caractérisé en ce qu'**il contient une quantité de silicate ou de matière à base de silice qui forme une liaison entre les particules de la matière minérale.

**7.** Matériau isolant composite selon l'une quelconque des revendications précédentes, **caractérisé en ce que** la matière minérale inerte du point de vue chimique est une matière ou contient une matière du groupe composé de la perlite, de la vermiculite et de la terre d'infusoires.

**8.** Matériau isolant composite selon la revendication 7, **caractérisé en ce que** la perlite ou la vermiculite est soumise à une expansion et possède une masse volumique apparente inférieure à 1000 kg/m$^3$.

**9.** Matériau isolant composite selon l'une quelconque des revendications précédentes, **caractérisé en ce que** les particules de la matière minérale inerte du point de vue chimique possède une granulométrie qui se situe entre 0,1 et 1000 µm.

**10.** Matériau isolant composite selon l'une quelconque des revendications précédentes, **caractérisé en ce que** l'agent de liaison hydraulique est du ciment.

**11.** Matériau isolant composite selon l'une quelconque des revendications précédentes, **caractérisé en ce qu'**il est muni d'un renforcement.

**12.** Matériau isolant composite selon la revendication 11, **caractérisé en ce que** le renforcement est un mat ou un tissu de fibres minérales, en particulier de fibres de verre, ou encore une structure ouverte tel qu'un réseau ou une structure en nid d'abeilles.

**13.** Procédé pour fabriquer un matériau isolant composite qui possède une isolation aussi bien acoustique que thermique, dans lequel on mélange des particules d'au moins une matière minérale, inerte du point de vue chimique et incombustible, des fibres, un agent de liaison hydraulique et de l'eau ; après quoi, on procède au durcissement de la matière en ajoutant une quantité de silane au mélange, de préférence à l'eau, **caractérisé en ce qu'**on ajoute par mélange au moins deux types de fibres choisis parmi les types comprenant des fibres minérales, des fibres polymères et des fibres organiques, d'une manière isotrope, au mélange.

**14.** Procédé selon revendication 13, **caractérisé en ce qu'**on ajoute des fibres d'au moins deux des types qui sont indiqués ci-après : des fibres minérales possédant une longueur de fibres entre 0,2 µm et 20 mm et un diamètre de 5 à 2000 µm, des fibres polymères possédant une longueur entre 1 mm et 50 mm et un diamètre entre 5 µm et 2 mm, et des fibres organiques possédant une longueur entre 100 µm et 10 mm et une épaisseur de 1 à 2000 µm.

**15.** Procédé selon la revendication 13 ou 14, **caractérisé en ce qu'**on ajoute une quantité de dioxyde de silicium synthétique amorphe, à titre de matière supplémentaire inerte du point de vue chimique, sous la forme d'une poudre dont la granulométrie est inférieure à 20 microns, en se situant de préférence entre 1 et 15 microns.

**16.** Procédé selon revendication 15, **caractérisé en ce qu'**on ajoute du dioxyde de silicium amorphe au mélange, sous la forme de microsphères lisses.

**17.** Procédé selon l'une quelconque des revendications 13 à 16, **caractérisé en ce qu'**on ajoute un alcoxysilane au mélange.

**18.** Procédé selon la revendication 17, **caractérisé en ce qu'**on ajoute un triéthoxyméthylsilane au mélange.

**19.** Procédé selon l'une quelconque des revendications 13 à 18, **caractérisé en ce qu'**on ajoute, à titre de matière inerte, de la perlite, de la vermiculite ou de la terre d'infusoires, la perlite et la vermiculite étant de préférence expansées.

**20.** Procédé selon la revendication 19, **caractérisé en ce qu'**on ajoute de la perlite expansée possédant une masse volumique apparente inférieure à 1000 kg/m$^3$ et qui possède une granulométrie entre 0,1 et 1000 µm.

**21.** Procédé selon l'une quelconque des revendications 13 à 20, **caractérisé en ce que** l'on mélange un volume de matière inerte qui représente de 1 à 20 fois le volume de l'agent de liaison hydraulique, et un volume de fibres qui représente de 0,01 à 10 fois le volume de l'agent de liaison hydraulique.

**22.** Procédé selon la revendication 21, **caractérisé en ce que** l'on mélange un volume de matière inerte qui représente de 1 à 10 fois le volume de l'agent de liaison hydraulique, et un volume de fibres qui représente de 0,1 à 3 fois le volume de l'agent de liaison hydraulique.

**23.** Procédé selon l'une quelconque des revendications 13 à 22, **caractérisé en ce qu'**on mélange du silane avec l'eau en une quantité de 0,1 à 10 % en volume ; après quoi, on ajoute ce mélange au mélange de la matière inerte, des fibres et de l'agent de liaison hydraulique.

24. Procédé selon l'une quelconque des revendications 13 à 23, **caractérisé en ce qu'**on ajoute un volume d'eau avec du silane qui représente entre 1 et 10 fois le volume de l'agent de liaison hydraulique.

25. Procédé selon l'une quelconque des revendications 13 à 24, **caractérisé en ce qu'**on ajoute également au mélange, une quantité de silicate.

26. Procédé selon la revendication 25, **caractérisé en ce qu'**on ajoute de l'ortho-éthylsilicate au mélange.

27. Procédé selon la revendication 25 ou 26, **caractérisé en ce qu'**on ajoute du silane et du silicate, à concurrence de 2 à 10 % en volume, calculés sur le volume total du mélange, dans un rapport volumique réciproque de 20/1 à 1/20.

EP 1 078 899 B1